(19) Europäisches Patentamt / European Patent Office / Office européen des brevets

(11) **EP 2 362 213 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(51) Int Cl.:
***G01N 29/04*** *(2006.01)*

(21) Anmeldenummer: **10002002.3**

(22) Anmeldetag: **26.02.2010**

(54) **Verfahren zur Überwachung und Überprüfung von plattenförmigen Bauteilen**

Method for monitoring and testing board-like components

Procédé de surveillance et de contrôle de composants en forme de plaques

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**31.08.2011 Patentblatt 2011/35**

(73) Patentinhaber: **Fraunhofer-Gesellschaft zur Förderung der angewandten Forschung e.V.
80686 München (DE)**

(72) Erfinder:
- **Schubert, Lars
  01920 Schönteichen OT Petershain (DE)**
- **Klesse, Thomas
  01157 Dresden (DE)**
- **Lieske, Uwe
  01109 Dresden (DE)**
- **Frankenstein, Bernd
  01454 Ullersdorf (DE)**

(74) Vertreter: **Pfenning, Meinig & Partner mbB
Patent- und Rechtsanwälte
An der Frauenkirche 20
01067 Dresden (DE)**

(56) Entgegenhaltungen:
**US-A- 5 760 904**

- **YE LU ET AL: "Crack identification in aluminium plates using Lamb wave signals of a PZT sensor network" SMART MATERIALS AND STRUCTURES, IOP PUBLISHING LTD., BRISTOL, GB LNKD- DOI:10.1088/0964-1726/15/3/021, Bd. 15, Nr. 3, 1. Juni 2006 (2006-06-01), Seiten 839-849, XP020105418 ISSN: 0964-1726**
- **NING HU ET AL: "Damage identification of metallic structures using A0 mode of lamb waves" STRUCTURAL HEALTH MONITORING SAGE PUBLICATIONS UK, Bd. 7, Nr. 3, September 2008 (2008-09), Seiten 271-285, XP002592360 ISSN: 1475-9217**
- **AJAY RAGHAVAN ET AL: "Guided-wave signal processing using chirplet matching pursuits and mode correlation for structural health monitoring" SMART MATERIALS AND STRUCTURES, IOP PUBLISHING LTD., BRISTOL, GB LNKD- DOI:10.1088/0964-1726/16/2/014, Bd. 16, Nr. 2, 1. April 2007 (2007-04-01), Seiten 355-366, XP020120409 ISSN: 0964-1726**
- **SICARD R ET AL: "A SAFT algorithm for lamb wave imaging of isotropic plate-like structures" ULTRASONICS, IPC SCIENCE AND TECHNOLOGY PRESS LTD. GUILDFORD, GB LNKD- DOI:10.1016/S0041-624X(01)00087-7, Bd. 39, Nr. 7, 1. April 2002 (2002-04-01), Seiten 487-494, XP004352285 ISSN: 0041-624X**
- **AXINTE D A ET AL: "An approach to use an array of three acoustic emission sensors to locate uneven events in machining-Part 1: method and validation" INTERNATIONAL JOURNAL OF MACHINE TOOLS AND MANUFACTURE, ELSEVIER, US, Bd. 45, Nr. 14, 1. November 2005 (2005-11-01), Seiten 1605-1613, XP025333745 ISSN: 0890-6955 [gefunden am 2005-11-01]**

EP 2 362 213 B1

**Beschreibung**

Die Erfindung betrifft ein Verfahren und eine spezielle Sensoranordnung zur Überwachung und Überprüfung von plattenförmigen Bauteilen. Derartige Überwachungen können an Bauteilen durchgeführt werden, die sowohl aus isotropen als auch aus anisotropen Materialien gebildet sind. Dabei werden elastische Ultraschallwellen, bevorzugt Plattenwellen (Lambwellen) mit geeigneten Sensoren detektiert.

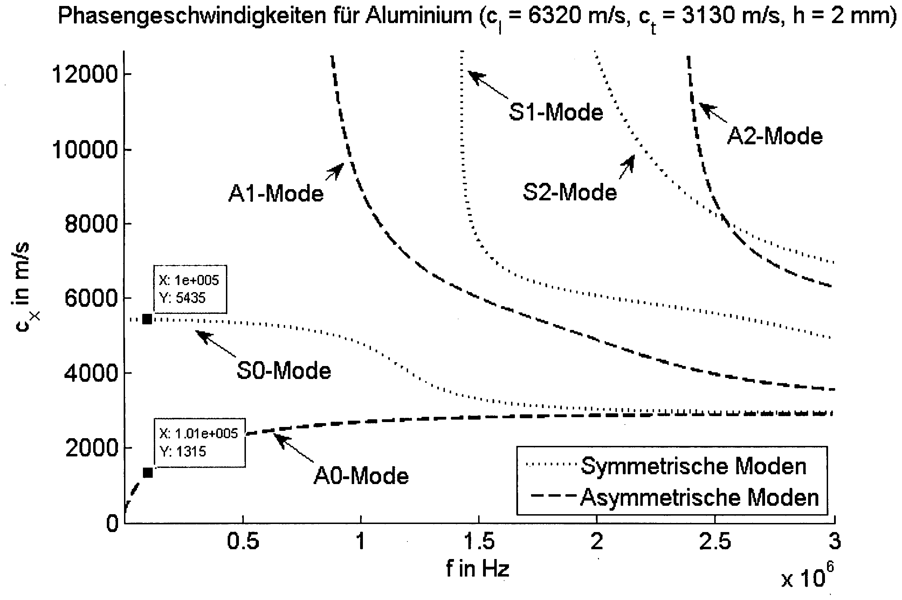

Plattenwellen unterscheiden sich in der Art der Teilchenbewegungen über die Plattendicke und breiten sich in verschiedenen Wellen-Moden innerhalb bzw. an einem plattenförmigen Element aus. Diese Wellen-Moden unterscheiden sich wiederum frequenzabhängig in Ihrer Wellenlänge und Schallgeschwindigkeit. Figur 1 zeigt ein Phasengeschwindigkeitsdiagramm für Aluminium (d = 2 mm) für Frequenzen bis f= 3 MHz, in dem der asymmetrische (A0-Mode) und der symmetrische Grundmode (S0-Mode) gekennzeichnet sind. Für die Frequenz f = 100 kHz sind die Schallgeschwindigkeiten dieser beiden Wellen-Moden im Diagramm gekennzeichnet. Für Frequenzen größer Null beschreiben einzelne Teilchen elliptische Bahnen, um ihre Ruhelage und für Frequenzen f $\rightarrow$ Null erfolgt beim symmetrischen Wellen-Mode S0 die Teilchenbewegung parallel zur Oberfläche und bei einem asymmetrischen Wellen-Mode A0 senkrecht zur Oberfläche eines Bauteils.

Da die Positionsbestimmung von Fehlern/Defekten durch Detektion von Schallwellen üblicherweise durch zeitaufgelöste Detektion von mit Sensoren detektierten Ultraschallwellenmesssignalen über die Bestimmung von Laufzeiten der Schallwellen erfolgt, ist die Kenntnis der jeweiligen Schallgeschwindigkeit erforderlich.

Von Fehlern/Defekten emittierte oder auch mit aktiver Einflussnahme in ein Bauteil eingekoppelte Schallwellen weisen aber einen frequenzabhängigen nicht bekannten Wellen-Mode auf. Dies ist bei von Fehlern/Defekten ohne äußere Einflussnahme, allein im Betrieb emittierten Schallwellen generell der Fall. Bei aktiv eingekoppelten Schallwellen erfolgt aber an Fehlern/Defekten eine undefiniert für den jeweiligen Fehler/Defekt spezifische Modenumwandlung der Schallwellen, so dass sich auch die Schallgeschwindigkeit der sich im Bauteil ausbreitenden Schallwellen entsprechend dem jeweiligen gewandelten Wellen-Mode verändert.

Da sich aber die Schallgeschwindigkeiten von Schallwellen gleicher Frequenz für unterschiedliche Wellen-Moden erheblich unterscheiden können, sind Fehler bei der Positionsbestimmung von Fehlern/Defekten unvermeidlich und es tritt eine große Abweichung auf. Die bauteilspezifischen Schallgeschwindigkeiten für einen S0-Wellen-Mode weichen im für technische Anwendungen interessanten niedrigen Frequenzbereich mindestens um das Doppelte von denen für einen A0-Wellen-Mode ab. Es liegt auf der Hand, dass dadurch bei einer Laufzeitbestimmung entsprechend große Fehler auftreten, die auch mit, wie bisher empirisch ermittelten Korrekturfaktoren oder Erfahrungswerten nur geringfügig reduziert werden können.

Von Ye Lu et al. sind in "Crack identification in aluminium plates using Lamb wave signals of a PZT sensor metwork"; SMART MATERIALS AND STRUCTURES, IOP PUBLISHING LTD.; BRISTOL; GB LNKD- DOI: 10.1088/0964-1726/15/3/021, Bd. 15, Nr. 3, 1. Juni 2006 (2006-06-01), Seiten 839-849, ISSN: 0964-1726 Möglichkeiten zur Fehlererkennung unter Nutzung von Lambwellen angegeben.

Von Ning Hu et al. ist eine ähnliche Technik, bei der auch verschiedene Wellenmoden beachtet werden, in "Damage Identification of Metallic Structures Using A0 Mode of Lamb Waves"; STRUCTURAL HEALTH MONITORINGSAGE PUBLICATIONS UK, Bd. 7, Nr. 3, September 2008 (2008-09), Seiten 271-285, ISSN: 1475-9217 beschrieben.

Untersuchungen für einen Einsatz von geführten Wellen sind von Ajay Raghavan et al. in "Guided-wave signal processing using chirplet matching pursuits and mode correlation for structural health monitoring"; SMART MATERIALS AND STRUCTURES, IOP PUBLISHING LTD. BRISTOL, GB LNKD-DOI: 10.1088/0964-1726/16/2/014, Bd. 16, Nr. 2, 1. April 2007 (2007-04-01), Seiten 355-366, ISSN: 0964-1726 veröffentlicht worden.

Es ist daher Aufgabe der Erfindung die Genauigkeit einer Positionsbestimmung von Fehlern/Defekten bei der Überwachung von Bauteilen durch eine Bestimmung der Schallgeschwindigkeit von Ultraschallwellen zu verbessern.

Erfindungsgemäß wird diese Aufgabe mit einem Verfahren, das die Merkmale des Anspruchs 1 aufweist, gelöst. Dabei kann eine Sensoranordnung gemäß Anspruch 9 eingesetzt werden. Vorteilhafte Ausgestaltungen und Weiterbildungen der Erfindung können mit in untergeordneten Ansprüchen bezeichneten Merkmalen realisiert werden.

Bei dem erfindungsgemäßen Verfahren zur Überwachung von plattenförmigen Bauteilen werden mindestens zwei in einem bekannten Abstand s zueinander angeordnete Sensoren eingesetzt, mit denen Ultraschallwellen detektiert werden. Dabei wird mit Kenntnis der Schallgeschwindigkeiten von sich am/im jeweiligen Bauteil ausbreitenden elastischen Schallwellen, insbesondere Plattenwellen, mit sich voneinander unterscheidendem Wellen-Mode für mindestens eine ausgewählte Frequenz f, nach Bestimmung des tatsächlichen Wellen-Modes der mit den Sensoren S11, S12, ...,S1X detektierten Schallwellen, eine Positionsbestimmung von Fehlern am Bauteil durchgeführt. Dies erfolgt mit einer Bestimmung der Laufzeitdifferenzen von Schallwellen, die mit den jeweiligen Sensoren detektiert werden.

Es können Schallwellen, die sich passiv im Bauteil, beispielsweise ausgehend von Fehlern/Defekten bei mechanischer Beanspruchung eines Bauteils, ausbreiten detektiert werden. Es können auch Schallwellen die aktiv in das Bauteil eingekoppelt worden sind und in beiden genannten Fällen auch an geeigneten Bauteilkanten oder Grenzflächen eines Bauteils zurück reflektierte Schallwellen detektiert werden.

Die Sensoren sollten zueinander bekannte Abstände aufweisen, die jedoch nicht gleich groß sein müssen. Es ist aber die Kenntnis der jeweiligen Detektionsposition erforderlich. So können Sensoren beispielsweise in einer Reihenanordnung, in einer Anordnung in Reihen und Spalten oder auch willkürlich angeordnet sein. Es besteht auch die Möglichkeit entsprechende piezoelektrische Ultraschallwandler sowohl als Sensoren, wie auch als Aktoren zu betreiben. Mit solchen Elementen kann nicht nur eine Detektion, sondern auch eine aktive Einkopplung von Schallwellen in definierter Form in das Bauteil erfolgen. Diese Schallwellen können dann mit anderen Sensoren oder solchen Elementen, die in bekanntem Abstand angeordnet sind bzw. in einem bekannten Abstand die Oberflächenauslenkungen erfassen (z.B. optische Sensoren), detektiert werden.

Bei der Erfindung kann/können ein passives (Schallemissionsprüfung, Acoustic Emission) und/oder ein aktives (Signaturanalyse, Acousto Ultrasonic) Verfahren zur Überwachung plattenförmiger Bauelemente eingesetzt werden.

Mittels der Schallemissionsüberwachung kann unter Nutzung von Triangulationsverfahren die Position der Quellemission von Fehlern/Defekten bestimmt werden.

Da, wie bereits ausgeführt, Schallwellen mit unterschiedlichen Wellen-Moden sich mit unterschiedlichen Schallgeschwindigkeiten ausbreiten, ist es notwendig zwischen diesen zu unterscheiden, um Positionsbestimmungsfehler zu vermeiden. Im Fall der Prüfung mittels Signaturanalyseverfahren werden aktiv elastische Wellen, wie die Plattenwellen im Material angeregt und die Zeitsignale an den Sensorpositionen detektiert. Dieses Einkoppeln von Plattenwellen kann zyklisch wiederholt werden. Abhängig von der Art des Schadensfalls/Fehlers und der Struktur des jeweiligen Bauteils existieren in der detektierten und aufgezeichneten Zeitreihe der Messsignale zusätzliche Wellen-Moden, die aufgrund von Modenwandlungsprozessen an Positionen mit Fehlern/Defekten entstehen. Für eine exakte Lokalisierung des Fehlers ist es auch hier notwendig den neu entstandenen Wellen-Mode zu identifizieren und so unter Verwendung der entsprechenden Schallgeschwindigkeit den Fehler zu lokalisieren, was mit einem Ellipsenverfahren oder dem SAFT-Verfahren möglich ist.

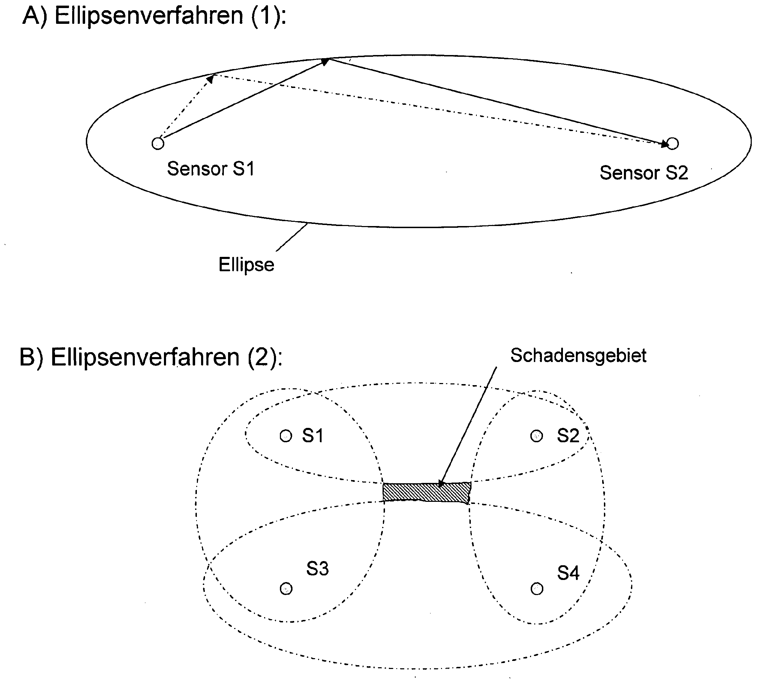

Beide Verfahren haben gemeinsam, dass eine Positionsbestimmung eines Fehlers/Defektes die Kenntnis der Schallgeschwindigkeit und damit auch die Kenntnis des jeweiligen Wellen-Modes der detektierten Schallwellenmesssignale erfordert. Bei der Lokalisierung mittels Ellipsenverfahren werden die an den Schadstellen/Fehlern neu entstandenen Wellen-Moden im Zeitsignal über eine Differenzbildung extrahiert. Die Differenzbildung erfolgt durch Subtraktion der Zeitsignale des aktuellen (geschädigten) Zustandes mit den Zeitsignalen des ungeschädigten Zustandes eines Bauteils, die mit den entsprechend angeordneten Sensoren S1, S2, SX detektiert werden. Mögliche Positionen/Quellorte mit Fehlern/Defekten liegen auf einer Ellipse um jeweils ein betrachtetes Paar von Sensoren (Figur 2A). Diese Bestimmung kann für verschiedene Sensor-Paare durchgeführt werden (Figur 2B). Der Schnittpunkt der resultierenden Ellipsen kennzeichnet die Schadensposition. Dieses Verfahren benötigt zur korrekten Rekonstruktion die Schallgeschwindigkeit des im Differenzsignal auftretenden Wellen-Mode, dessen Erkennbarkeit durch Modenwandlungsprozesse infolge eines Fehlers/Defekts erschwert wird.

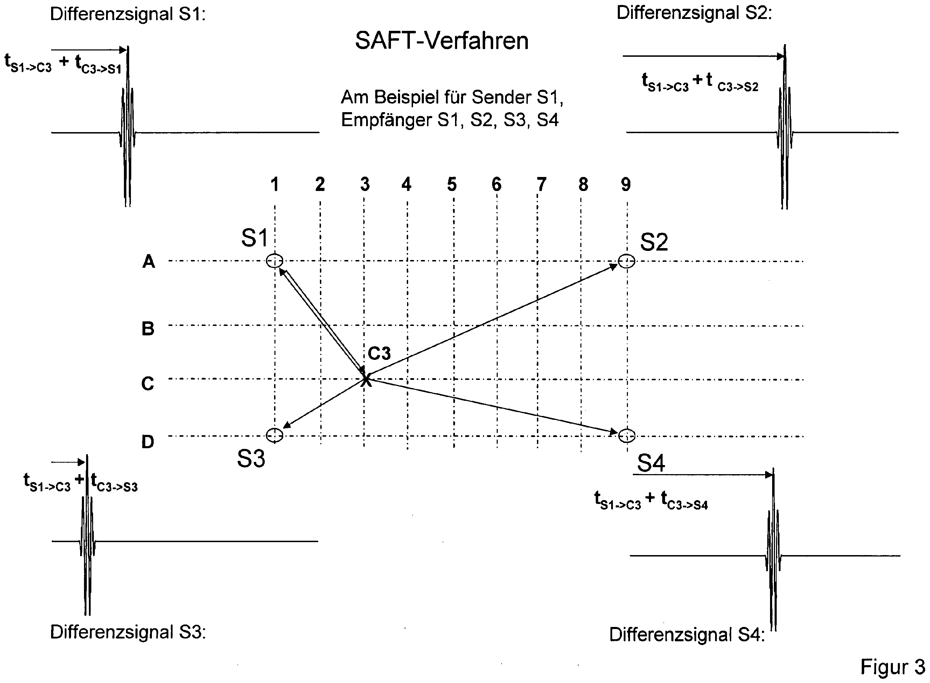

Für das SAFT (synthetic aperture focussing technique) Verfahren wird das zu überwachende Bauteil bzw. ein Teilbereich davon in Quadranten aufgeteilt (Figur 3). Für jeden Quadrant wird das (z.B. nach Differenzbildung) erhaltene Messsignal rechnerisch/synthetisch auf die entsprechende Koordinate fokussiert. Dies wird nachfolgend als Fokussierungspunkt FP bezeichnet. Der Ablauf wird beispielhaft an Figur 3 vorgestellt: Aus der bekannten Entfernung des jeweiligen Sensors S1, S2 oder SX zum Fokussierungspunkt C3 und unter Annahme einer Wellen-Modegeschwindigkeit wird ein Zeitpunkt $t_{C3}$->$_{S1}$ berechnet. Nach Ermittlung des Zeitpunktes $t_{S1 \rightarrow C3}$, der der Laufzeit des Wellen-Modes vom Aktor zum Fokussierungspunkt FP entspricht, kann die Gesamtzeit $t_a = t_{C3 \rightarrow S1} + t_{S1 \rightarrow C3}$ berechnet werden. Der zu diesem Zeitpunkt im detektierten Messsignalverlauf vorhandene Amplitudenwert wird ermittelt und auf die mit dem gleichen Vorgehen ermittelten Amplitudenwerte der anderen genutzten Sensoren addiert. Ergebnis ist eine ortsaufgelöste Verteilung von Amplitudenwerten, in der betragsmäßig hohe Amplituden auf Fehl-/Defektstellen deuten.

Sensoren, die für die Zustandsüberwachung üblicherweise bisher eingesetzt werden, bestehen aus separaten piezoelektrischen Schwingungsaufnehmern, die Auslenkungen integral über ihre applizierte Fläche erfassen, was bei der Anordnung der Sensoren und der Einhaltung bestimmter Abstände von nebeneinander angeordneten Sensoren berücksichtigt werden soll. Auf die Einhaltung bestimmter Abstände von Sensoren ist nachfolgend noch zurück zu kommen.

Bisher erfolgt die Identifikation der Wellen-Moden über a-priori Wissen, welcher Fehler welche Modenwandlung bzw. Streuwellen hervorrufen könnte und dies beruht daher auf Erfahrungswerten. Besonders in schlaggeschädigten anisotropen Faserverbundwerkstoffen treten komplexe Modenwandlungsprozesse auf, so dass in den aufgezeichneten Zeitreihen der detektierten Messsignale meist mehrere verschiedene Wellen-Moden auftreten und es dadurch zu Fehlern über die Art und die Position eines Fehlers/Defekts kommen kann.

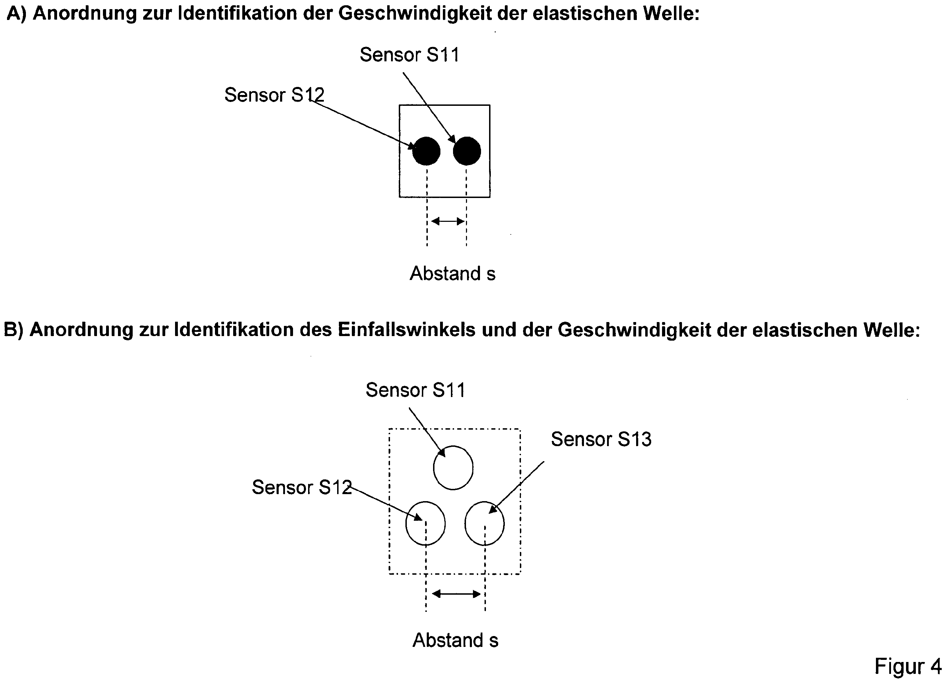

Mit dem erfindungsgemäßen Verfahren und der speziellen Sensoranordnung kann zwischen den verschiedenen Wellen-Moden unterschieden werden (Figur 4(A)). Dazu werden mindestens zwei Sensoren zur Detektion von Ultraschallwellen in einem Verbund derart angeordnet, dass der Abstand s dieser Sensoren mit der größten auftretenden Geschwindigkeit $v_{max}$ eines Wellen-Modes und der Abtastfrequenz $f_a$ des verwendeten Messsystems so korreliert, das folgende Bedingung erfüllt ist:

$$s \geq v_{max} / f_a \qquad (1)$$

Der Abstand der Sensoren s darf dabei bestimmte Grenzen nicht über- bzw. unterschreiten. Der maximale Sensorabstand ergibt sich aus der verwendeten Länge eines gleitenden Korrelationsfensters $t_k$ mit

$$s_{max} = v_{max} * t_k / 2. \qquad (2)$$

Die größte auftretende Schallgeschwindigkeit $v_{max}$ eines Wellen-Modes kann bevorzugt messtechnisch mittels Signaturanalyse oder künstlichen Schallemissionssignalen (HSU-Nielson-Quellanregung/Bleistiftminenbruch) erfasst oder auch theoretisch berechnet werden. Wie dies von D.A. Axinte et al. in "An approach to use an array of three acoustic emission sensors to locate uneven events in machining part 1: method and validation"; International Journal of Machine Tools& Manufacture 45(2005); S. 1605-1613 oder von H.L. Dunegan in "An Alternative to Pencil Lead Breaks for Simulation of Acoustic Emission Signal Sources"; The Deci Report; August 200; Dunegan Engineering Company; Verfügbar in http://www.deci.com/report008.pdf, beschrieben ist.

Bei Kenntnis der Schallgeschwindigkeiten bei bestimmten Frequenzen für unterschiedliche Wellen-Moden (Figur 1) kann die größte auftretende Schallgeschwindigkeit eines Wellen-Modes für den genutzten Frequenzbereich ermittelt werden.

Der minimale Sensorabstand $S_{min}$ ist in Abhängigkeit der Abtastrate $t_a$ des verwendeten Messsystems mit

$$S_{min} = v_{max} * t_a \qquad (3)$$

zu wählen.

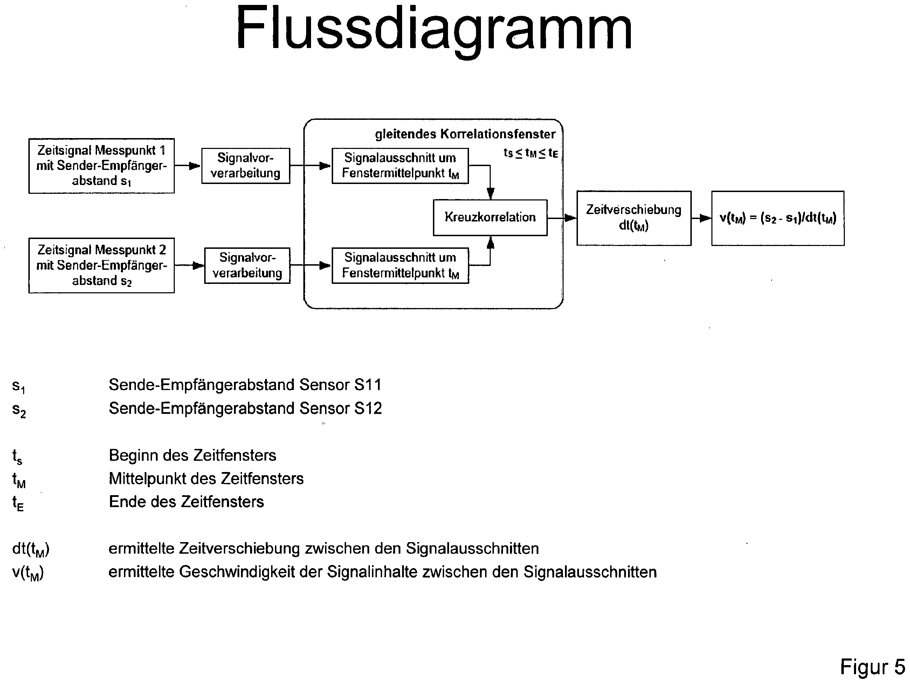

Die Identifikation der entsprechenden Wellen-Moden erfolgt über ein zeitaufgelöstes Korrelationsverfahren, bei dem innerhalb eines gleitenden Zeitfensters Messsignalabschnitte korreliert werden. Figur 5 zeigt ein Blockschaltbild hierzu.

Das erfindungsgemäße Verfahren kann die unterschiedlichen Schallgeschwindigkeiten der unterschiedlichen Wellen-Moden nutzen, die im niedrigen Frequenzbereich einer plattenförmigen Struktur für isotrope oder anisotrope Werkstoffe je nach Materialaufbau, um Faktoren im Bereich von 2 bis 10 variieren können. In dem für technische Anwendungen interessanten niedrigen Frequenzbereich treten lediglich der S0 und A0-Mode auf. Beide Wellen-Moden unterscheiden sich hier um Größenordnungen (2 bis 10) in ihrer Schallgeschwindigkeit.

Die Schallgeschwindigkeiten der im betreffenden Frequenzbereich angeregten Wellen-Moden sollten zumindest in etwa bekannt sein.

Sie können messtechnisch erfasst oder theoretisch berechnet werden. Die Zusammenhänge zwischen den auf der Bauteiloberfläche beobachteten Schallgeschwindigkeiten $c_x$ der verschiedenen Wellen-Moden (=Phasengeschwindigkeit) und den Materialkonstanten $c_1$ und $c_t$ sowie der Platten-/Bauteildicke h beschreiben die Lösungen der Lambwellengleichung (Gleichung 4)

$$(\tan(qh) / \tan(ph))^{\pm 1} = - 4 (pqk_x^2 / (q^2 - k_x^2)^2 \qquad (4)$$

für isotrope Medien.

Der positive Exponent beschreibt die Ausbreitungsbedingungen für die symmetrischen Plattenwellen (S0, S1, S2, ...), der negative Exponent die der asymmetrischen Plattenwellen (A0, A1, A2, ). Die Anzahl der Lösungen des Gleichungssystems entspricht, bei bekannter Frequenz der Anzahl der auftretenden Wellen-Moden. Hat Gleichung (4) nur eine einzige Lösung, dann kann nur der Grundwellen-Mode aufgetreten sein. Die Wellenzahlen (Index 1 für Longitudinalwellen, t für Transversalwellen, x für symmetrische oder asymmetrische Plattenwellen) errechnen sich mit

$$k_1 = \omega / c_1 \ , \ k_t = \omega / c_t \ , \ k_x = \omega / c_x \qquad (5)$$

wobei $\omega$ die Kreisfrequenz, $c_1$ die longitudinale und $c_t$ die transversale Schallgeschwindigkeit von Ultraschallwellen ist. Das Verhältnis von Kreisfrequenz $\omega$ und Geschwindigkeit c wird als Wellenzahl k bezeichnet. Die verwendeten dimensionslosen Vereinfachungen für p und q ergeben sich mit

$$p = (k_1 - k_x)^{0,5}, \quad q = (k_t - k_x)^{0,5} \tag{6}$$

Messsignale werden mit an benachbarten Messpositionen angeordneten Sensoren detektiert und die Sensoren weisen dabei Abstände $s_1$ und $s_2$ auf. Anschließend kann eine Messsignalvorverarbeitung erfolgen. Dabei kann eine Filterung der Messsignale, Trennung von Rausch- und Nutzsignalanteilen und eine eventuelle Hüllkurvenberechnung durchgeführt werden.

Bei der Bestimmung von Wellen-Moden kann im Zeitbereich ein gleitendes Messsignalfenster mit dem Fenstermittelpunkt $t_M$ und einer wählbaren Länge $t_k$ über die Zeitsignale gelegt werden, um Messsignalausschnitte zu separieren. Innerhalb dieser Fenster wird mittels Kreuzkorrelation die Zeitverschiebung $d_t(t_M)$ zwischen beiden Messsignalausschnitten berechnet. Mit dieser Zeitverschiebung $d_t(t_M)$ wird mit dem bekanntem Abstand $s_2 - s_1$ der Sensoren in eine Geschwindigkeit $v(t_M)$ mit

$$v(t_M) = (s_2 - s_1)/d_t(t_M) \tag{7}$$

umgerechnet.

Ergebnis dieses Verfahrensschrittes ist eine Relativschallgeschwindigkeit beider "Messsignalinhalte", die mit zwei Sensoren zum Zeitpunkt $t_M$ in den betrachteten Zeitsignalen innerhalb der gleitenden Messsignalfenster detektiert worden sind. Dies kann aber auch mit anderen Paaren von mit Sensoren erfassten Messsignalen erfolgen, die die Bedingungen für minimale oder maximale Aktor-Sensor-Abstände erfüllen.

In den nächsten Schritten kann der Fenstermittelpunkt von $t_s \geq t_M \geq t_E$ schrittweise (z.B. in ganzen Abtastwerten) variiert und jeweils die dem Mittelpunkt des Fensters $t_M$ entsprechende Zeitverschiebung $d_t(t_M)$ berechnet werden. Über oben stehende Gleichung (7) kann abschließend die Relativschallgeschwindigkeit $v(t_M)$ zwischen beiden miteinander verglichenen Sensorpositionen für alle Fenstermittelpunkte $t_M$ berechnet werden. Damit ist eine zeitliche Zuordnung der Verteilung der Schallgeschwindigkeit in den Zeitsignalen und damit eine Bestimmung der Wellen-Moden möglich.

Nachfolgend soll die Erfindung beispielhaft näher erläutert werden.

Dabei zeigen:

Figur 1 ein Phasengeschwindigkeitsdiagramm für ein plattenförmiges Bauteil aus Aluminium mit einer konstanten Dicke von 2 mm für verschiedene Frequenzen und Wellen-Moden, die nach Gleichung (4) ermittelt wurden;

Figur 2 in schematischer Form eine Erklärung für Ellipsenverfahren;

Figur 3 in schematischer Form eine Erklärung für das SAFT-Verfahren;

Figur 4 zwei Beispiele für eine Anordnung von Sensoren bei der erfindungsgemäßen Überwachung;

Figur 5 ein Flussdiagramm einer Vorgehensweise zur Durchführung des erfindungsgemäßen Verfahrens;

Figur 6 eine schematische Darstellung zur Erklärung der Bestimmung eines Wellen-Modes mit zwei Sensoren unter zusätzlicher Nutzung rückreflektierter Schallwellen am Bauteilrand;

Figur 7 in einem Diagramm detektierte Messsignalverläufe, die Berechnung der Zeitdifferenzen in gleitendem Messsignalzeitfenster und

Figur 8 in einem Diagramm detektierte Messsignalverläufe, die Berechnung der Schallgeschwindigkeiten für Wellen-Moden über Zeitdifferenzen und den Abstand s zwischen Sensoren.

In Figur 2 sind zwei Varianten für eine Positionsbestimmung mit dem Ellipsenverfahren gezeigt. Dabei sind bei der Variante (1) zwei Sensoren S1 und S2 in einem bekannten konstanten Abstand s zueinander an einem plattenförmigen Bauteil angebracht. Um beide Sensoren S1 und S2 ist eine Ellipse gezogen.

Bei der Variante (2) sind vier Sensoren S1 bis S4 am Bauteil vorhanden. Dabei sind um jeweils ein paar der Sensoren S1 bis S4 jeweils eine Ellipse gezogen, so dass insgesamt vier Ellipsen genutzt werden, die einen schraffierten Bereich umschließen in dem ein Fehler/Defekt lokalisiert werden kann. Im Übrigen wird hierzu auf die Ausführungen im allgemeinen Teil der Beschreibung hingewiesen.

Das Vorgehen zur Positionsbestimmung unter Nutzung des SAFT-Verfahrens soll mit Figur 3 verdeutlicht werden. Dabei ist zwischen vier Sensoren S1 bis S4 eine Unterteilung in Quadranten vorgenommen worden, wobei drei Zeilen und acht Spalten gewählt wurden. Jeder Schnittpunkt der Zeilen und Geraden entspricht einem Fokussierungspunkt FP.

An Position c3 kann ein Fehler/Defekt, der an den Positionen der Sensoren S1 bis S1 erfassten zu zusätzlichen Messsignalen oder veränderten Messsignalanteilen nach einer Emission von Schallwellen vom Sensor S1 führt, durch Differenzbildung mit Messsignalen eines Zustandes ohne Fehler/Defekt, erkannt werden. In Figur 3 ist dargestellt, wie diese Differenzmesssignale mit von Sensoren S1 bis S1 erfassten Messsignalen ermittelt worden sind. Das SAFT-Verfahren ordnet jedem Fokussierungspunkt FP (A1-A9, B1-B9, C1-C9, D1-D9) eine Fehleramplitude zu. Diese Fehleramplitude AF kann aus den Differenzmesssignalen ermittelt werden.

$$AF\ (FP) = \sum_{i=1}^{\text{Anzahl Aktoren}} \sum_{j=1}^{\text{Anzahl Sensoren}} Aij(ta(ri,rj))$$

mit

$$ta(ri,rj) = (ri + rj) / v$$

| | |
|---|---|
| AF | Fehleramplitude |
| FP | Fokussierungspunkt |
| ri | Strecke Aktor - Fokussierungspunkt |
| rj | Strecke Sensor - Fokussierungspunkt |
| Aij | Differenzsignal bei der Anregung mit dem i-ten |
| Aktor und Empfang | mit dem j-ten Sensor |
| ta | Zeitpunkt im Differenzsignal |

$A_{ij}$ entspricht dabei der Amplitude des Differenzmesssignals des j-ten Sensors bei Anregung mit dem i-ten Aktor. Mit dem erfindungsgemäßen Verfahren kann die Geschwindigkeit v des im Differenzmesssignal enthaltenen Wellen-Modes bestimmt werden und so Fehler bei der Positionsbestimmung vermieden werden.

In Figur 4 sind zwei Beispiele für bei der Erfindung einsetzbare Anordnungen von Sensoren gezeigt.

Dabei sind einmal zwei Sensoren S11 und S12 und einmal drei Sensoren S11, S12 und S13 an einem Bauteil mit entsprechendem Abstand s zueinander angeordnet. Der Abstand s soll dabei in einem Bereich zwischen $s_{min}$ und $s_{max}$, wie im allgemeinen Teil der Beschreibung erklärt, gehalten sein. Der Abstand s soll jeweils vom Flächenschwer- oder Mittelpunkt eines Kontakt- oder Detektionsbereiches der Sensoren S11 zu S12 oder der Abstände zwischen den drei Sensoren S11 bis S13 berücksichtigt werden. Ein Detektionsbereich kann bei berührungsloser, z.B. optischer Detektion berücksichtigt werden.

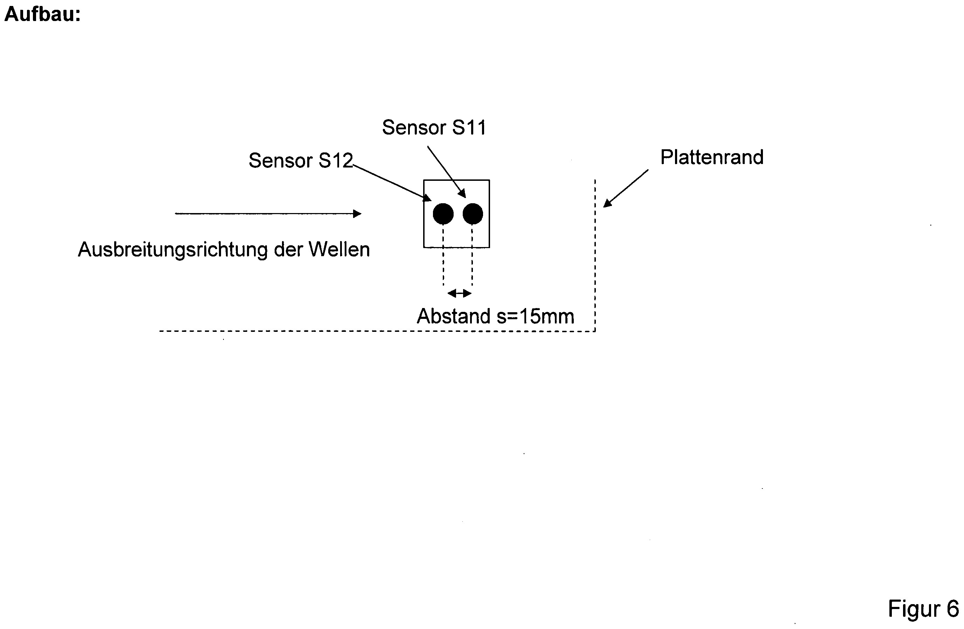

Figur 6 zeigt ein Beispiel, bei dem zwei in einem Abstand s = 15 mm voneinander entfernt angeordnete Piezowandler als Sensoren S11 und S12 auf eine Aluminiumplatte geklebt wurden. Mit einem weiteren (entfernteren) Ultraschallwandler (nicht gezeigt) wurde ein hanninggefenstertes Kosinussignal mit 4 Schwingungen (RC4) der Frequenz f = 100 kHz in die Aluminiumplatte emittiert.

Die Schallgeschwindigkeit des S0-Modes bei f = 100 kHz beträgt für die verwendete Aluminiumplatte $c_x$ = 5435 m/s, die Schallgeschwindigkeit des A0-Modes $c_x$ = 1310 m/s. Diese Werte wurden theoretischen Berechnungen unter Nutzung von Gleichung (4) nach Figur 1 entnommen. In dem betrachteten Frequenzbereich existieren lediglich diese beiden Wellen-Moden der Plattenwellen.

Sensor S11 befindet sich in größerem Abstand zum Ultraschallwandler als der Sensor S12 und näher zur Plattenkante als Sensor S12. Folglich ist zu erwarten, dass Sensor S12 den hinlaufenden Wellen-Mode S0 mit der größeren Schallgeschwindigkeit zuerst detektieren wird, Sensor S11 hingegen zuerst die an der Kante des Bauteilrandes rückreflektierten Schallwellen im S0-Wellen-Mode, die vorab vom Ultraschallwandler emittiert oder eingekoppelt worden sind.

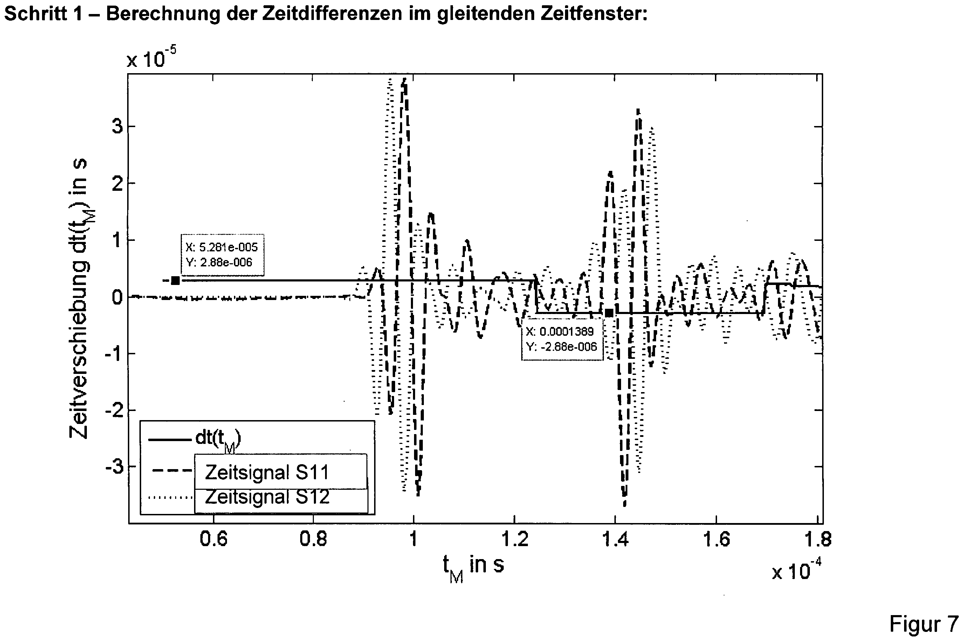

Figur 7 zeigt die Messsignalverläufe, die von Sensor S11 in gestrichelter und Sensor S12 gepunkteter Linienführung, detektiert worden sind. Mit der durchgehenden Linie sind die überlagerten Zeitdifferenzen der "gleitenden" Fenstermittelpunkte berücksichtigt. Als Zeitdifferenz im Bereich des ersten eintreffenden Wellen-Mode (ca. bei $t_M$ = 100µs) wird $d_t$ = 2,88 µs ermittelt. Dies entspricht unter Berücksichtigung des Sensorabstandes s = 15 mm einer Geschwindigkeit von:

$$v(t_M = 100 \ \mu s) = 15 \ mm \ / \ 2{,}88*10\text{-}6 \ s = 5208 \ m/s.$$

Dieser Wellen-Mode muss damit ein (hinlaufender) S0-Mode sein, da der A0-Mode bedeutend kleinere Geschwindigkeiten aufweisen würde.

Die an der Bauteilkante zurückreflektierten Schallwellen werden, wie erwartet zuerst von Sensor 11 und anschließend von Sensor S12 detektiert. Als Zeitdifferenz im Bereich des zweiten eintreffenden Wellen-Mode (ca. bei $t_M$ = 140 $\mu$s) wird $d_t$ = -2,88 $\mu$s ermittelt. Dies entspricht dann einer Geschwindigkeit von

$$v(t_M = 140 \ \mu s) = 15mm \ / \ -2{,}88*10\text{-}6 \ s = -5208 \ m/s$$

Damit ist dieser Wellen-Mode ein (rücklaufender) S0-Mode.

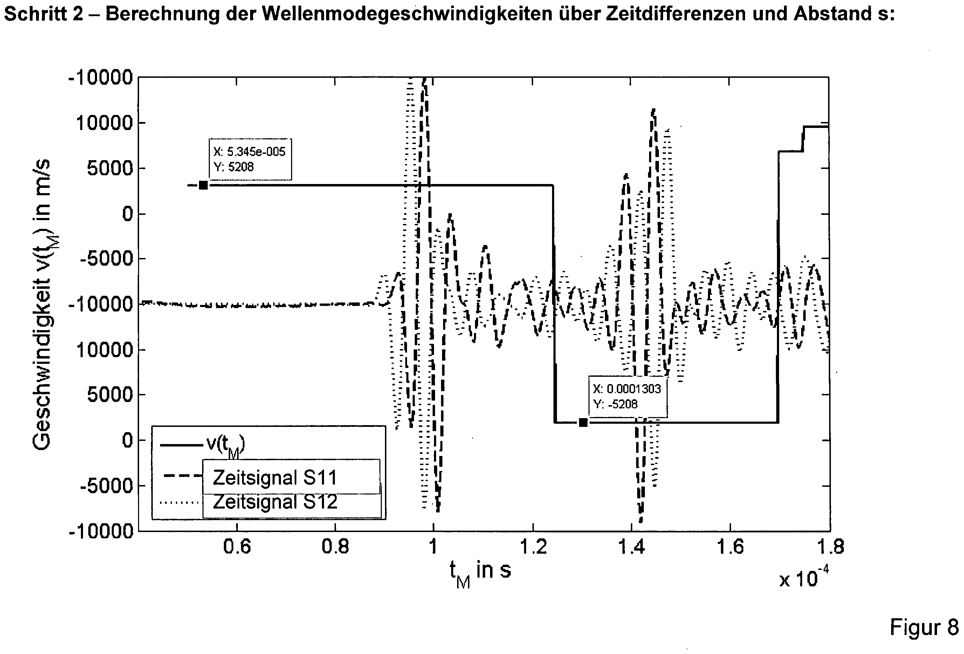

Figur 8 zeigt die gesamte Schallgeschwindigkeitsverteilungsfunktion (durchgezogene Linie), der mit gestrichelter und gepunkteter Linienführung beide Sensormesssignale überlagert sind.

Es können Gruppenschallgeschwindigkeiten (durch z.B. Hüllkurvenbildung vor der Korrelation) oder Phasengeschwindigkeiten durch Korrelation der Hochfrequenzsignale der Wellen-Moden mit diesem Verfahren ermittelt werden.

Der Abstand der Sensoren S11, S12 bis S1X sollte derart gewählt werden, dass eine Zeitauflösung unter Berücksichtigung der Eigenschaften des technischen Systems zur Datenaufnahme möglich ist.

Unter Verwendung von mindestens drei Sensoren (Figur 4(B)) ist es möglich, die Richtung der einlaufenden Schallwellen räumlich aufzulösen. Mit zunehmender Sensoranzahl kann der Fehler bei der räumlichen Auflösung für eine Positionsbestimmung von Fehlern/Defekten minimiert werden.

Das Verfahren kann auch für die Unterscheidung anderer elastischer Wellentypen angewendet werden, wenn sich die Schallgeschwindigkeiten dieser Wellen-Modentypen ausreichend unterscheiden.

**Patentansprüche**

1. Verfahren zur Überwachung oder Überprüfung von plattenförmigen Bauteilen, bei dem mit mindestens zwei in einem bekannten Abstand s zueinander angeordneten Sensoren (S11, S12 - S1X) Ultraschallwellen detektiert werden und dabei mit Kenntnis der Schallgeschwindigkeiten von sich am/im jeweiligen Bauteil von elastischen Schallwellen mit sich voneinander unterscheidendem Wellen-Mode für mindestens eine ausgewählte Frequenz f, nach Bestimmung des tatsächlichen Wellen-Modes der mit den Sensoren (S11, S12 - S1X) detektierten Schallwellen eine Positionsbestimmung von Fehlern am Bauteil, durch eine Bestimmung von Laufzeitdifferenzen der Schallwellen, die mit den Sensoren (S11, S12 - S1X) detektiert werden, durchgeführt wird,
**dadurch gekennzeichnet, dass**
die maximale detektierte Schallgeschwindigkeit von Ultraschallwellen mindestens eines Wellen-Modes mittels gleitender Messsignalfenster mit sich zeitlich veränderndem Fenstermittelpunkt $t_m$ bestimmt wird
wobei
innerhalb dieser Messsignalfenster mittels Kreuzkorrelation die Zeitverschiebung $d_t(t_M)$ zwischen Messsignalausschnitten berechnet wird und diese Zeitverschiebung $d_t(t_M)$ mit dem bekannten Abstand $s_2 - s_1$ der Sensoren in eine Geschwindigkeit $v(t_M)$ mit

$$v(t_M) = (s_2 - s_1)/d_t(t_M)$$

umgerechnet und
im Ergebnis dieses Verfahrensschrittes eine Relativschallgeschwindigkeit der Messsignalinhalte, die mit zwei Sensoren zu einem Zeitpunkt $t_M$ in den betrachteten Zeitsignalen innerhalb der gleitenden Messsignalfenster detektiert worden sind, ermittelt wird.

2. Verfahren nach Anspruch 1, **dadurch gekennzeichnet, dass** eine passive Detektion von im Bauteil emittierten Ultraschallwellen und/oder eine aktive Detektion mittels mit einem Schallwellen am oder in das Bauteil emittierenden Ultraschallwandler durchgeführt wird.

3. Verfahren nach Anspruch 1 oder 2, **dadurch gekennzeichnet, dass** die Laufzeitdifferenzen jeweils an einem Paar der Sensoren (S11, S12-S1X) bestimmt werden.

**4.** Verfahren nach einem der vorhergehenden Ansprüche, **dadurch gekennzeichnet, dass** die Positionsbestimmung von Fehlern/Defekten mittels Ellipsenverfahren und/oder SAFT-Verfahren durchgeführt wird.

**5.** Verfahren nach einem der vorhergehenden Ansprüche, **dadurch gekennzeichnet, dass** die maximale detektierte Schallgeschwindigkeit von Ultraschallwellen mindestens eines Wellen-Modes durch ein Signaturanalyseverfahren oder mittels HSU-Nielson-Quellanregung, der mit Sensoren (S11, S12 -S1X) detektierten Messsignale, bestimmt wird.

**6.** Verfahren nach einem der vorhergehenden Ansprüche, **dadurch gekennzeichnet, dass** die Relativgeschwindigkeit $v(t_M)$ von jeweils mit zwei Sensoren (S11, S12 - S1X) detektierten Messsignalen für alle Fenstermittelpunkte $t_M$ der gleitenden Messsignalfenster bestimmt wird.

**7.** Verfahren nach einem der vorhergehenden Ansprüche, **dadurch gekennzeichnet, dass** zusätzlich die Schallgeschwindigkeit von an Bauteilkanten oder Grenzflächen mit bekanntem Abstand zu mindestens zwei Sensoren (S11, S12 -S1X) zurück reflektierten Schallwellen bestimmt wird.

**8.** Verfahren nach einem der vorhergehenden Ansprüche, **dadurch gekennzeichnet, dass** mindestens zwei Sensoren (S11, S12 - S1X) in einem Abstand s zueinander angeordnet sind, der innerhalb eines Intervalls zwischen $s_{min}$ und $s_{max}$ liegt, wobei $s_{min} = v_{max} * t_a$ und $s_{max} = v_{max} * t_k / 2$ und dabei $S_{min}$ der minimale, $s_{max}$ der maximale Sensorabstand, $t_a$ die Abtastrate, $t_k$ die Länge eines gleitenden Korrelationsfensters und $v_{max}$ eine größte auftretende Geschwindigkeit eines Wellen-Modes sind.

**Claims**

**1.** Method for monitoring or testing plate-shaped components, in which ultrasonic waves are detected using at least two sensors (S11, S12-S1X) which are arranged at a known distance s from each other, and thereby performing for at least one selected frequency f, with knowledge of the sound velocities of elastic components propagating at/in the respective component with different wave modes, after determination of the actual wave mode of the sound waves detected using the sensors (S11, S12 - S1X), a position determination of flaws at the component, by a determination of transit-time differences of the sound waves detected using the sensors (S11, S12 - S1X),
**characterized in that**
the maximum detected sound velocity of ultrasonic waves of at least one wave mode is determined using sliding measurement signal windows having a temporally changing window center $t_m$,
wherein
the time shift $d_t (t_M)$ is calculated between measurement signal sections within said measurement signal windows using cross-correlation, and said time shift $d_t (t_M)$ with the known distance $s_2 - s_1$ of the sensors is converted into a velocity $v (t_M)$ using

$$v (t_M) = (s_2 - s_1) / d_t (t_M)$$

and, as a result of said method step, a relative sound velocity of the measurement signal contents, which have been detected using two sensors at a time $t_M$ in the considered time signals within the sliding measurement signal windows, is determined.

**2.** Method according to claim 1,
**characterized in that**
a passive detection of ultrasonic waves emitted in the component and/or an active detection is carried out with the aid of an ultrasonic transducer which emits sound waves at or into the component.

**3.** Method according to claim 1 or 2,
**characterized in that**
the transit-time differences are each determined at a pair of the sensors (S11, S12 - S1X).

**4.** Method according to one of the preceding claims,
**characterized in that**

the position determination of flaws/defects is carried out by means of ellipse methods and/or the SAFT process.

5. Method according to one of the preceding claims,
   **characterized in that**
   the maximum detected sound velocity of ultrasonic waves of at least one wave mode is determined by a signature analysis process or using the HSU-Nielsen source excitation of measurement signals detected using sensors (S11, S12 -S1X).

6. Method according to one of the preceding claims,
   **characterized in that**
   the relative velocity v ($t_M$) of measurement signals which are each detected by two sensors (S11, S12 - S1x) is determined for all window centers $t_M$ of the sliding measurement signal windows.

7. Method according to one of the preceding claims,
   **characterized in that**
   in addition, the sound velocity of sound waves reflecting back at component edges or boundaries at a known distance to at least two sensors (S11, S12-S1X) is determined.

8. Method according to one of the preceding claims,
   **characterized in that**
   at least two sensors (S11, S12 - S1X) are arranged at a distance s from each other which lies within an interval between $s_{min}$ and $s_{max}$, wherein Smin = $v_{max} * t_a$ and $s_{max} = v_{max} * t_k / 2$, and thereby $s_{min}$ representing the minimum sensor distance, $s_{max}$ the maximum sensor distance, $t_a$ the sampling rate, $t_k$ the length of a sliding correlation window and $v_{max}$ a largest occurring velocity of a wave mode.

## Revendications

1. Procédé de surveillance ou de contrôle de composants en forme de plaques, dans lequel, avec au moins deux capteurs (S11, S12 - S1X), disposés à une distance s connue les uns par rapport aux autres, des ondes ultrasonores sont détectées et, grâce à la connaissance des vitesses des ondes sonores élastiques se propageant sur/dans le composant, avec des modes d'ondes différents entre eux, pour au moins une fréquence sélectionnée f, après la détermination du mode d'onde des ondes sonores détectées par les capteurs (S11, S12 - S1X), une détermination de la position des défauts sur le composant est effectuée grâce à la détermination des différences de temps de trajet des ondes sonores détectées par les capteurs (S11, S12-S1X),
   **caractérisé en ce que**
   la vitesse maximale détectée des ondes ultrasonores d'au moins un mode d'onde est déterminée au moyen de fenêtres de signaux de mesure mobiles avec un centre de fenêtre $t_m$ variable dans le temps,
   moyennant quoi, à l'intérieur de cette fenêtre de signaux de mesure, grâce à une corrélation croisée, le décalage temporel $d_t(t_M)$ entre des fractions de signaux de mesure est calculé et ce décalage temporel $d_t(t_M)$ est converti, avec la distance connue des capteurs $s_2 - s_1$, en une vitesse $v(t_M)$, grâce à l'équation :

$$v(t_M) = (s_2 - s_1) / d_t(t_M)$$

et, en tant que résultat de cette étape du procédé, une vitesse sonore relative des contenus des signaux de mesure, qui ont été détectés par deux capteurs à un moment $t_M$ des signaux de temps considérés à l'intérieur de la fenêtre de signaux de mesure mobile, est déterminée.

2. Procédé selon la revendication 1, **caractérisé en ce qu'**une détection passive d'ondes ultrasonores émises dans le composant et/ou une détection active est effectuée au moyen d'un convertisseur d'ultrasons émis avec une onde sonore sur ou dans le composant.

3. Procédé selon la revendication 1 ou 2, **caractérisé en ce que** les différences de temps de trajet sont déterminées chacune au niveau d'une paire de capteurs (S11, S12-S1X).

4. Procédé selon l'une des revendications précédentes, **caractérisé en ce que** la détermination de la position des défauts est effectuée au moyen de procédés par ellipses et/ou de procédés SAFT.

5. Procédé selon l'une des revendications précédentes, **caractérisé en ce que** la vitesse maximale détectée des ondes ultrasonores d'au moins un mode d'onde est déterminée à l'aide d'un procédé d'analyse de signature ou au moyen d'une excitation de source HSU-Nielson des signaux de mesure détectés par les capteurs (S11, S12-S1X).

6. Procédé selon l'une des revendications précédentes, **caractérisé en ce que** la vitesse relative $v(t_M)$ des signaux de mesure est détectée chacun par deux capteurs (S11, S12 - S1X) pour tous les centres de fenêtres $t_M$ des fenêtres de signaux de mesure mobiles.

7. Procédé selon l'une des revendications précédentes, **caractérisé en ce qu'**en outre, la vitesse des ondes sonores réfléchies au niveau des arêtes du composant ou des interfaces avec une distance connue par rapport à au moins deux capteurs (S11, S12 - S1X) est déterminée.

8. Procédé selon l'une des revendications précédentes, **caractérisé en ce qu'**au moins deux capteurs (S11, S12 - S1X) sont disposés à une distance s entre eux, qui se trouve dans un intervalle entre $S_{min}$ et $s_{max}$, où $S_{min} = v_{max} * t_a$ et $s_{max} = v_{max} * t_k / 2$ et $S_{min}$ sont la distance minimale par rapport au capteur, $s_{max}$ étant la distance maximale par rapport au capteur, $t_a$ étant la fréquence de balayage, $t_k$ étant la longueur d'une fenêtre de corrélation glissante et $v_{max}$ étant la vitesse maximale d'un mode d'onde.

Phasengeschwindigkeiten für Aluminium ($c_l$ = 6320 m/s, $c_t$ = 3130 m/s, h = 2 mm)

A2-Mode

S1-Mode

S2-Mode

A1-Mode

S0-Mode

A0-Mode

X: 1e+005
Y: 5435

X: 1.01e+005
Y: 1315

Symmetrische Moden
Asymmetrische Moden

f in Hz

$c_x$ in m/s

12000
10000
8000
6000
4000
2000

0    0.5    1    1.5    2    2.5    3

x 10$^6$

## A) Ellipsenverfahren (1):

Sensor S1

Sensor S2

Ellipse

## B) Ellipsenverfahren (2):

Schadensgebiet

S1

S2

S3

S4

EP 2 362 213 B1

Differenzsignal S1:

$t_{S1->C3} + t_{C3->S1}$

SAFT-Verfahren

Am Beispiel für Sender S1,
Empfänger S1, S2, S3, S4

Differenzsignal S2:

$t_{S1->C3} + t_{C3->S2}$

1  2  3  4  5  6  7  8  9

S1

A

B

C3

C

D

S3

$t_{S1->C3} + t_{C3->S3}$

S2

S4

$t_{S1->C3} + t_{C3->S4}$

Differenzsignal S3:

Differenzsignal S4:

Figur 3

EP 2 362 213 B1

**A) Anordnung zur Identifikation der Geschwindigkeit der elastischen Welle:**

Sensor S11

Sensor S12

Abstand s

EP 2 362 213 B1

**B) Anordnung zur Identifikation des Einfallswinkels und der Geschwindigkeit der elastischen Welle:**

Sensor S11

Sensor S13

Sensor S12

Abstand s

Figur 4

# Flussdiagramm

| | |
|---|---|
| $s_1$ | Sende-Empfängerabstand Sensor S11 |
| $s_2$ | Sende-Empfängerabstand Sensor S12 |
| | |
| $t_s$ | Beginn des Zeitfensters |
| $t_M$ | Mittelpunkt des Zeitfensters |
| $t_E$ | Ende des Zeitfensters |
| | |
| $dt(t_M)$ | ermittelte Zeitverschiebung zwischen den Signalausschnitten |
| $v(t_M)$ | ermittelte Geschwindigkeit der Signalinhalte zwischen den Signalausschnitten |

Figur 5

**Aufbau:**

Sensor S11

Sensor S12

Plattenrand

Ausbreitungsrichtung der Wellen

Abstand s=15mm

Figur 6

**Schritt 1 – Berechnung der Zeitdifferenzen im gleitenden Zeitfenster:**

Figur 7

EP 2 362 213 B1

Schritt 2 – Berechnung der Wellenmodegeschwindigkeiten über Zeitdifferenzen und Abstand s:

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Crack identification in aluminium plates using Lamb wave signals of a PZT sensor metwork. **VON YE LU et al.** SMART MATERIALS AND STRUCTURES. IOP PUBLISHING LTD, 01. Juni 2006, vol. 15, 839-849
- Technik, bei der auch verschiedene Wellenmoden beachtet werden. **VON NING HU et al.** Damage Identification of Metallic Structures Using A0 Mode of Lamb Waves. STRUCTURAL HEALTH MONITORINGSAGE PUBLICATIONS, September 2008, 271-285

- Guided-wave signal processing using chirplet matching pursuits and mode correlation for structural health monitoring. **AJAY RAGHAVAN et al.** SMART MATERIALS AND STRUCTURES. IOP PUBLISHING LTD, 01. April 2007, vol. 16, 355-366
- **D.A. AXINTE et al.** An approach to use an array of three acoustic emission sensors to locate uneven events in machining part 1: method and validation. *International Journal of Machine Tools& Manufacture,* 2005, vol. 45, 1605-1613
- An Alternative to Pencil Lead Breaks for Simulation of Acoustic Emission Signal Sources. **H.L. DUNEGAN.** The Deci Report. Dunegan Engineering Company